# EUROPÄISCHE PATENTSCHRIFT

(11) **EP 2 527 232 B1**
(45) Veröffentlichungstag und Bekanntmachung des Hinweises auf die Patenterteilung: **25.03.2015**
(21) Anmeldenummer: 12163133.7
(22) Anmeldetag: 04.04.2012
(51) Int. Cl.: B62D 29/00

(54) **Aluminiumdruckgussteil**
Aluminium pressure cast part
Pièce coulée sous pression en aluminium

(30) Priorität: 25.05.2011 DE 102011076426
(43) Veröffentlichungstag der Anmeldung: 28.11.2012
(73) Patentinhaber: Bayerische Motoren Werke Aktiengesellschaft, 80809 München (DE)
(72) Erfinder: Bluemlhuber, Wolfgang, Dr., 80797 München (DE); Klinkenberg, Franz-Josef, Dr-, 84030 Ergolding (DE); Segaud, Jean-Marc, 84034 Landshut (DE); Deck, Philipp, 85716 Unterschleißheim (DE); Anhalt, Holger, 82194 Gröbenzell (DE); Volz, Karlheinz, 82266 Inning am Ammersee (DE); Maier, Dieter, 85716 Unterschleißheim (DE)

(56) Entgegenhaltungen:
- EP-A2- 1 498 345
- DE-A1- 10 108 171
- DE-A1-102009 047 810

## Beschreibung

Die Erfindung bezieht sich auf ein Aluminiumdruckgussteil und insbesondere einen Aluminiumdruckgussträger etwa in Form einer Federstütze für ein Kraftfahrzeug, nach dem Oberbegriff des Patentanspruchs 1.

Ein solches Aluminiumdruckgussteil ist aus der DE 10 2009 047 810 bekannt.

Aluminiumdruckgussteile sind wegen ihrer günstigen technologischen und mechanischen Eigenschaften und vor allem wegen ihres, bezogen auf die Festigkeit, geringen Baugewichts weit verbreitet, besitzen jedoch eine hohe Materialsprödigkeit und ein dementsprechend erhöhtes Bruchrisiko unter stoßartigen Biegebeanspruchungen.

Aufgabe der Erfindung ist es, ein Aluminiumdruckgussteil, insbesondere in Form eines tragenden Kraftfahrzeugteils, so auszubilden, dass das Risiko eines Bauteilbruchs im Crashfall auf technologisch einfache Weise deutlich verringert wird.

Diese Aufgabe wird erfindungsgemäß durch das im Patentanspruch 1 gekennzeichnete Aluminiumdruckgussteil gelöst.

Erfindungsgemäß werden die auf das Aluminiumdruckgussteil einwirkenden Belastungsstöße durch ein oder mehrere voneinander beabstandete, auf der belastungsäußeren Seite des Aluminiumteils befestigte Bänder aus einem - im Unterschied zum Aluminiumteil - hochgradig zugfesten und zugleich duktil verformbaren Material abgefangen und dadurch eine in den belastungsäußeren Randzonen entstehende Rissbildung, die bei einem derartigen Gussteil die Ursache für einen Bauteilbruch ist, wirksam unterbunden, ohne dass das Bauteil in aufwändiger Weise, etwa durch eine vollflächige, tragfähige Beschichtung oder einen Lösungsglühvorgang vorbehandelt werden muss. Dabei wird durch die Zugbänder nicht etwa nur eine Desintegration des Gussteils in der Weise verhindert, dass dieses in einzelne Bruchstücke zerfällt, die dann durch die Zugbänder zusammen gehalten werden. Vielmehr lässt sich das Aluminiumdruckgussteil unter dem Einfluss stoßartiger Biegebelastungen sogar in erhebllichem Umfang dauerhaft rissfrei umformen, so dass es in der bevorzugten Ausgestaltung als tragendes Bauteil eines Kraftfahrzeugs den strikten Anforderungen nach einem umfassenden Insassenschutz in hervorragender Weise genügt.

Aus Gründen einer möglichst gleichmäßigen Anbindung der Zugbänder an das Gussteil empfiehlt es sich, diese in Bandlängsrichtung durchgehend lastfest mit dem Gussteil zu verbinden. Als besonders vorteilhaft hat es sich erwiesen, das Zugband mit dem Aluminiumgussteil nicht starr, sondern über eine zähelastische Klebeschicht zu verkoppeln, so dass die Belastungsstöße in der Klebeschicht zwischen Gussteil und Zugband gedämpft werden. Vorzugsweise besteht das Zugband aus einem - in die Klebeschicht eingebetteten - Stahlband oder einem Faserverbundband mit einer duktil verformbaren, zähelastischen Faserverbundmatrix, um Delaminationserscheinungen der Faserverbundstruktur zu verhindern, wenn das Zugband zusammen mit dem Gussteil in Biegerichtung verformt wird. In diesem Fall kann das Faserverbundmaterial unmittelbar auf das Gussteil auflaminiert und auf diesem konsolidiert und dabei über die Faserverbundmatrix mit dem Gussteil verbunden werden, so dass in fertigungstechnischer Vereinfachung auf eine gesonderte Klebeschicht verzichtet werden kann.

Die Errfindung wird nunmehr an anhand zweier Ausführungsbeispiele in Verbindung mit den Figuren näher beschrieben. Es zeigen in stark schematisierter Darstellung:
- **Fig. 1a, b**: ein erfindungsgemäß ausgebildetes Aluminiumdruckgussteil in der Aufsicht vor (a) und in der Seitenansicht nach (b) einer stoßartigen Biegeverformung;
- **Fig. 2a, b**: ein erfindungsgemäßes Aluminiumdruckgussteil in Form einer Kraftfahrzeug-Federstütze im Schnitt (a) und in der Ansicht (b); und
- **Fig. 3a, b**: eine vergrößerte Teildarstellung eines Aluminiumdruckgussteils mit einem Zugband aus Stahl (a) bzw. aus Faserverbundmaterial (b).

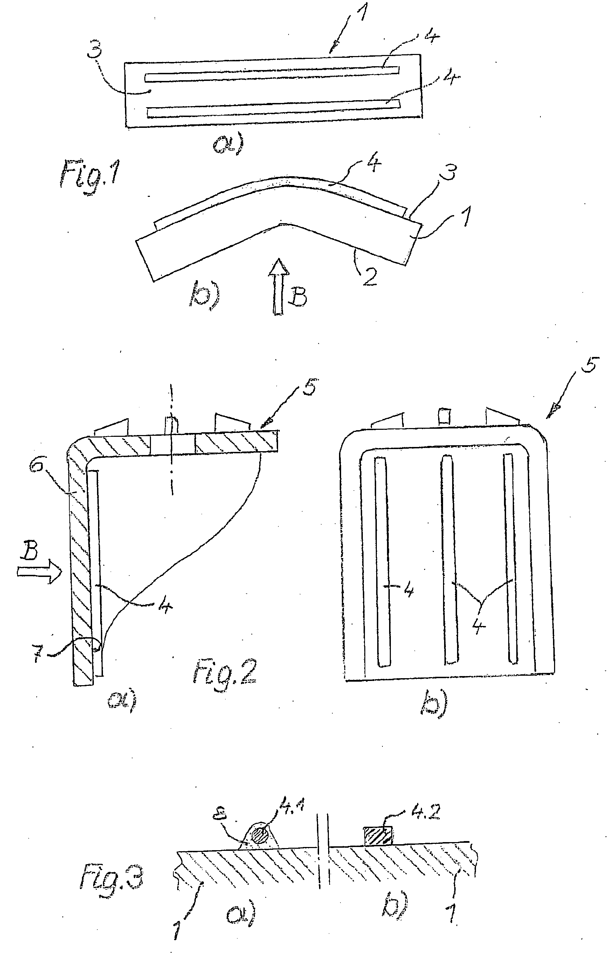

Das in Fig. 1 in Form eines quaderförmigen Trägers dargestellte Aluminiumdruckgussteil 1 ist auf der der im Crashfall belasteten Seite 2 gegenüberliegenden Außenseite 3 mit mehreren - bei dem gezeigten Ausführungsbeispiel zwei parallel zueinander verlaufenden - hochgradig zugfesten Stahlbändern 4 belegt, welche mit dem Gussteil 1 über ihre gesamte Länge lastfest verbunden, z. B, verklebt sind.

Während ein herkömmlicher Aluminiumdruckgussträger eine hohe Materialsprödigkeit besitzt und daher unter der Wirkung eines punktuell angreifenden Belastungsstoßes B schon nach einer begrenzten Biegeverformung zu Bruch gehen kann, wird das Crashverhalten des Aluminiumgussteils 1 aufgrund der beschriebenen Zugbandanordnung 4 soweit verbessert, dass es sich, wie in Fig. 1b gezeigt, bis zu einem sehr hohen Verformungsgrad dauerhaft riss- und bruchfrei verbiegen lässt.

Als praktisches Ausführungsbeispiel eines erfindungsgemäßen Aluminiumdruckgussteils 1 ist in Fig. 2 eine Kraftfahrzeug-Federstütze 5 dargestellt, die an ihrem Vertikalschenkel 6 dem Risiko einer stoßartigen Biegebelastung B ausgesetzt und an der biegeäußeren Seite 7 auf die anhand der Fig. 1 beschriebene Weise mit Zugbändern 4 belegt ist, so dass sich der Vertikalschenkel 6 im Crashfall bis zu einem sehr hohen Verformungsgrad plastisch ausbiegen kann, bevor die Bruchgrenze erreicht wird.

Fig. 3 zeigt zwei bevorzugte Ausgestaltungen einer Zugbandanordnung. Gemäß Fig. 3a besteht das Zugband aus einem Stahlseil 4.1, welches in einen zähelastischen Klebstoff 8 eingebettet und über diesen lastfest mit dem Aluminiumdruckgussteil 1 verbunden ist. Dabei wird durch die zwischen Stahlseil 4.1 und Gussteil 1 vorhandene Klebeschicht - anders als bei einer starren Anbindung - eine Dämpfung der Belastungsstöße erreicht. Nach Fig. 3b besteht das Zugband aus einem Faserverbundband 4.2. Aus Gründen eines duktilen Biegeverhaltens und um Delaminationserscheinungen der Faserstruktur unter Biegeverformung zu verhindern, wird als Faserverbundmatrix ein im konsolidierten Zustand zähelastischer Kunststoff verwendet, durch den das Zugband 4.2 unter Verzicht auf eine gesonderte Klebeschicht unmittelbar mit dem Aluminiumdruckgussteil 1 lastfest und stoßabsorbierend verbunden werden kann.

## Patentansprüche

1. Aluminiumdruckgussteil, insbesondere tragendes Bauteil für ein Kraftfahrzeug, **dadurch gekennzeichnet, dass**
zum Schutz gegen stossartige Bruchlasten mindestens ein Zugband (4, 4.1, 4.2) aus einem duktil verformbaren Material auf der lastäußeren Seite (3, 7) des Gussteils (1, 5) lastfest angebracht ist.

2. Aluminiumdruckgussteil nach Anspruch 1, **dadurch gekennzeichnet, dass** das Zugband (4, 4.1, 4.2) in Bandlängsrichtung durchgehend mit dem Gussteil (1, 5) lastfest verbunden ist.

3. Aluminiumdruckgussteil nach einem der vorhergehenden Ansprüche, **dadurch gekennzeichnet, dass**
das Zugband (4.1) über eine zähelastische Klebeschicht (8) mit dem Aluminiumdruckgussteil (1) verbunden ist.

4. Aluminiumdruckgussteil nach einem der vorhergehenden Ansprüche, **dadurch gekennzeichnet, dass**
das Zugband (4) aus einem Stahl (4.1) - oder einem Faserverbundband (4.2) besteht.

## Claims

1. An aluminium die-casting, especially a load-bearing part for a motor vehicle, **characterised in that**
as a protection against sudden breaking loads, at least one tie rod (4, 4.1, 4.2) made of ductile material is applied in load-resistant manner to the outer load-bearing side (3.7) of the die-casting (1, 5).

2. An aluminium die-casting according to claim 1, **characterised in that**
the tie rod (4, 4.1, 4.2) is connected in load-resistant manner to the casting (1, 5) along the entire longitudinal direction thereof.

3. An aluminium die-casting according to any of the preceding claims, **characterised in that**
the tie-rod (4.1) is connected to the aluminium die-casting by a viscoplastics material adhesive layer (8).

4. An aluminium die-casting according to any of the preceding claims, **characterised in that**
the tie rod (4) is made of steel (4.1) or a composite fibre (4.2).

## Revendications

1. Pièce en aluminium coulée sous pression en particulier pièce portante pour un véhicule,
**caractérisée en ce que**
pour permettre d'obtenir une protection contre les charges de rupture intermittentes par secousses au moins une bande de traction (4, 4.1, 4.2) en un matériau déformable ductile est appliquée de façon à résister aux charges sur la face de charge externe (3, 7) de la pièce coulée (1, 5).

2. Pièce en aluminium coulée sous pression conforme à la revendication 1,
**caractérisée en ce que**
la bande de traction (4, 4.1, 4.2) est reliée de façon à résister aux charges de manière ininterrompue avec la pièce coulée (1, 5) dans la direction longitudinale de cette bande.

3. Pièce en aluminium coulée sous pression conforme à l'une des revendications précédentes,
**caractérisée en ce que**
la bande de traction (4. 1) est reliée à la pièce en aluminium coulée sous pression (1) par l'intermédiaire d'une couche adhésive (8) viscoélastique.

4. Pièce en aluminium coulée sous pression conforme à l'une des revendications précédentes,
**caractérisée en ce que**
la bande de traction (4) est une bande en acier (4.1) ou une bande (4.2) en matériau synthétique à base de fibres.
